# EUROPÄISCHE PATENTSCHRIFT

(11) **EP 2 219 013 B1**
(45) Veröffentlichungstag und Bekanntmachung des Hinweises auf die Patenterteilung: **10.04.2019**
(21) Anmeldenummer: 09152814.1
(22) Anmeldetag: 13.02.2009
(51) Int. Cl.: G01D 3/06

(54) **Stromerzeugungseinrichtung zur Erzeugung und gleichzeitigen Überwachung eines Messstroms**
Energy production device for producing and simultaneously monitoring measured current
Dispositif de production de courant destiné à la production et la surveillance simultanée d'un courant de mesure

(43) Veröffentlichungstag der Anmeldung: 18.08.2010
(73) Patentinhaber: VEGA Grieshaber KG, 77709 Wolfach (DE)
(72) Erfinder: BLESSING, Andreas, 78144 Schramberg - Tennenbronn (DE)
(74) Vertreter: Maiwald Patent- und Rechtsanwaltsgesellschaft mbH

(56) Entgegenhaltungen:
- DE-C1- 4 232 720
- FR-A- 2 447 540
- US-A- 4 619 140
- US-A- 4 849 754
- US-A1- 2006 167 644

## Beschreibung

### GEBIET DER ERFINDUNG:

Die Erfindung betrifft die Erzeugung und Überwachung von elektrischen Strömen. Insbesondere betrifft die Erfindung eine Stromerzeugungseinrichtung zur Erzeugung und gleichzeitigen Überwachung eines Messstroms für ein Füllstands-, Druck- oder Durchflussmessgerät, ein Füllstandsmessgerät mit einer Stromerzeugungseinrichtung, ein Druckmessgerät mit einer Stromerzeugungseinrichtung, ein Durchflussmessgerät mit einer Stromerzeugungseinrichtung, ein Verfahren zur Erzeugung und gleichzeitigen Überwachung eines Messstroms, ein Programmelement sowie ein computerlesbares Medium.

### TECHNOLOGISCHER HINTERGRUND:

In verschiedensten Bereichen des heutigen Wirtschaftslebens werden Feldgeräte wie beispielsweise Füllstand-, Druck- und Durchflussmessgeräte großflächig eingesetzt, um Messwerte in Tanks oder Leitungen zu ermitteln.

Die US 2006/167644 A1 beschreibt ein Feldgerat und ein Verfahren zur Kalibrierung eines Feldgerätes, wobei die Mittel zur Kalibrierung des Feldgerätes ein digitales Verstellelement und einen Mikroprozessor umfassen, wobei zur Kalibrierung des Feldgerätes das digitale Verstellelement vom Mikroprozessor angesteuert wird.

Die DE 42 32 720 C1 beschreibt eine Anordnung zur Funktionsüberwachung und Meßwertauswertung von Füllstands-Sensoren, insbesondere Vibrations-Füllstands-Grenzschaltern

Die FR 2 447 540 A beschreibt hingegen eine Strommessschaltung zur analogen Messung einer Größe, mit einer elektrischen Messschaltung.

Die US 4 849 754 A beschreibt ein Ferneichinstrumentensystem.

Mittels unterschiedlicher Technologien der Datenübertragung werden die Messwerte an Steuer- oder Leitzentren übermittelt. Dabei sind sowohl die analoge als auch die digitale Funkübertragung auf Basis elektromagnetischer Wellen ein bevorzugtes Mittel, um
beispielsweise Füllstände, die von einem entsprechenden Sensor im Feldeinsatz ermittelt wurden, an die Zentrale weiterzugeben.

Ist ein Teil der Übertragung an elektrische Leitungen gebunden, so wird der zu übermittelnde Messwert mit Hilfe eines elektrischen Stroms in Zwei- oder Vierdrahttechnik übertragen. Dieser Messstrom, der beispielsweise proportional zu dem physikalisch vorliegenden Messwert in einer Stromschleife ausgegeben wird, kann unter Umständen für eine Sicherheitsfunktion in einem sicherheitsrelevanten Überwachungskreis verwendet werden. Dabei kann es aus unterschiedlichsten technischen Gründen zu einer Abweichung zwischen dem tatsächlich erzeugten Messstrom und dem eigentlichen Sollwert, der mit dem tatsächlich vorliegenden physikalischen Messwert korrespondiert, kommen. Solch eine Abweichung kann beispielsweise im Ausfall eines Bauelementes in einem Strom bestimmenden Netzwerk begründet sein.

### ZUSAMMENFASSUNG DER ERFINDUNG:

Es kann als eine Aufgabe der Erfindung angesehen werden, eine verbesserte Übermittlung eines Messwertes für ein Füllstands-, Druck- oder Durchflussmessgerät anzugeben.

Es ist eine Stromerzeugungseinrichtung zur Erzeugung und gleichzeitigen Überwachung eines Messstroms für ein Füllstands-, Druck- oder Durchflussmessgerät, ein Füllstandsmessgerät, ein Druckmessgerät, ein Durchflussmessgerät, ein Verfahren zur Erzeugung und gleichzeitigen Überwachung eines Messstroms, ein Programmelement sowie ein computerlesbares Medium gemäß den Merkmalen der unabhängigen Ansprüche angegeben. Weiterbildungen der Erfindung ergeben sich aus den Unteransprüchen.

Die beschriebenen Ausführungsbeispiele betreffen gleichermaßen die Stromerzeugungseinrichtung, das Füllstandsmessgerät, das Druckmessgerät, das Durchflussmessgerät und das Verfahren.

Es sei darauf hingewiesen, dass im Kontext der Erfindung der Begriff "Sensor" die Begriffe "Füllstands"-, "Druck"- oder "Durchflussmessgerät" sowie andere Messgeräte umfasst. Analog dazu umfasst der Begriff "Sensorwert" den Begriff "Messwert".

Weiterhin ist unter dem Begriff "Erwartungswert" im Kontext der Erfindung der Wert der Kompensationsspannung oder des Kompensationsstroms zu verstehen, der beim Übereinstimmen des Messstroms mit dem Sollwert vorliegt. Dieser Erwartungswert hängt weiterhin von dem gewählten Betrag des eingespeisten Prüfstroms ab.

Ebenso umfasst der Begriff "Stromquelle" im Kontext der Erfindung, dass ein eingeprägter Strom durch diese Stromquelle ausgegeben werden kann.

Gemäß einem Ausführungsbeispiel der Erfindung ist eine Stromerzeugungseinrichtung zur Erzeugung und gleichzeitigen Überwachung eines Messstroms für ein Füllstands-, Druck- oder Durchflussmessgerät angegeben. Dabei weist die Stromerzeugungseinrichtung eine erste Stromquelle zum Erzeugen eines Messstroms und eine zweite Stromquelle zum Erzeugen eines Kompensationsstromes auf. Dabei dient der Kompensationsstrom zum Kompensieren zumindest eines Teils des Messstroms. Weiterhin weist die Stromerzeugungseinrichtung eine Detektionsschaltung zur Detektion einer Abweichung des Messstroms von einem Sollwert auf Basis des Kompensationsstromes auf.

Dabei kann die Stromerzeugungseinrichtung beispielsweise aus zwei unabhängigen Schaltkreisen bestehen, von denen jeweils einer eine der angegebenen Stromquellen enthält. Weiterhin ist es möglich, dass diese beiden Schaltkreise auf einer Platine angeordnet und in diese Platine als integrierte Schaltkreise integriert sind. Ebenso kann die Stromerzeugungseinrichtung ein integrierter Teil eines Füllstands-, Druck- oder Durchflussmessgerätes sein. Aber auch eine Stromerzeugungseinrichtung, die als separate externe Vorrichtung beabstandet von dem Messgerät angeordnet ist, ist möglich.

Weiterhin korrespondiert der Messstrom mit einem Messwert, der zuvor von einem Sensor eingelesen oder ermittelt worden ist. Dabei wird der Messstrom von der ersten Stromquelle erzeugt, beispielsweise aufgrund einer Steuerung oder Regelung der ersten Stromquelle durch einen Mikrocontroller. Dabei ist der Messstrom proportional zu dem Messwert, der vom Sensor ermittelt wurde.

Weiterhin kann der Messstrom als eingeprägter Ausgangsstrom der ersten Stromquelle bezeichnet werden, der innerhalb einer ersten Stromschleife oder innerhalb eines ersten Stromkreises fließt. Unter dem Begriff "eingeprägter Strom" kann die Tatsache verstanden werden, dass der Strom der Stromquelle im Wesentlichen unabhängig von einem Widerstand in der Schleife konstant gehalten wird. Es kann sich dabei auch um Wechselstrom beliebiger Frequenz und Kurvenform handeln. Sein Wert ist in weiten Grenzen unabhängig vom Belastungswiderstand in dem ersten Stromkreis.

Es sei weiterhin angemerkt, dass der Kompensationsstrom mit einer entsprechenden Kompensationsspannung korrespondiert. Somit kann im Kontext der Erfindung bei der Erzeugung, Messung und bei einem Vergleich des Kompensationsstroms immer auch analog von der Kompensationsspannung ausgegangen werden.

Weiterhin kann die Detektionsschaltung zum Beispiel als einfache Schaltung zur Spannungsmessung zwischen einem ersten Knotenpunkt oder Vergleichsstelle und einer Referenzstelle, wie beispielsweise einem Mikrocontroller, ausgeführt sein. Aber auch eine Schaltung, die komplexerer Art sein kann, ist möglich.

Ein wichtiger Aspekt bei der Detektion einer Abweichung des Messstroms von einem Sollwert ist die Messung des Kompensationsstroms bzw. der Kompensationsspannung an einer entsprechenden Stelle. Beispielsweise kann die Kompensationsspannung gemessen werden, die an einer ersten Stromfühlwiderstandseinheit die ein elektrischer Widerstand sein kann, abfällt. Aber auch andere elektrische, elektronische, optische oder magentische Detektionsverfahren sind möglich. Nach einer vorausgegangenen Messung der Kompensationsspannung folgt ein Vergleich des Messwertes der Kompensationsspannung mit einem vorgegebenen und/oder gespeicherten Erwartungswert.

Mit anderen Worten ist der Stromerzeugungseinrichtung ein Erwartungswert für die Höhe des Kompensationsstromes bzw. für die Höhe der Kompensationsspannung bereitgestellt und dient als Grundlage für die Detektion einer Abweichung. Dabei kann der Erwartungswert beispielsweise Null, aber auch ungleich Null sein. Durch einen Vergleich des Messergebnisses der Kompensationsspannung mit dem Erwartungswert erfolgt die Detektion und, falls gewünscht, eine entsprechende Benachrichtigung an einen Benutzer im Falle einer Abweichung. Ebenso ist eine Nachregelung der Stromquelle, die den Messstrom erzeugt, möglich.

Weiterhin ist es möglich, dass der Sollwert des Messstroms beispielsweise in der zweiten Stromquelle gespeichert ist. Aber auch eine externe Speicherung dieses Sollwertes innerhalb eines Mikrocontrollers, der die beiden Stromquellen steuert und regelt, ist möglich. Dabei entspricht der Sollwert demjenigen Messstrom, der bei korrekter Funktionsweise und Abwesenheit jeglicher Fehlzustände in dem gesamten System bestehend aus Stromerzeugungseinrichtung, Sensor sowie allen Elementen der Datenübertragung an die Zentrale vorhanden sein sollte.

Der Kompensationsstrom kann sich beispielsweise aus der Addition von dem Messstrom und dem von der zweiten Stromquelle erzeugten Prüfstrom ergeben. Diese Addition kann physikalisch zum Beispiel an der im Folgenden beschriebenen Vergleichsstelle geschehen.

Der Prüfstrom, I_{Prüf}, kann zum Beispiel gleich dem invertierten Sollwert, also - I_{Soll} sein. Aber auch eine Einspeisung des Prüfstroms in Höhe eines Vielfachen des invertierten Sollwertes ist möglich: I_{Prüf} = x(-I_{Soll}), wobei x jede positive oder negative gebrochen rationale Zahl sein kann. Abhängig von dem gewählten Betrag dieses Prüfstroms ergibt sich der Erwartungswert der Kompensationsspannung.

Aufgrund der Überwachung eines Messstroms gemäß diesem Ausführungsbeispiel der Erfindung ist es möglich, eine Überwachung eines Messstroms, der als eingeprägter Ausgangsstrom vorliegen kann, anzugeben, die unabhängig ist von Nichtlinearitäten, von Temperaturänderungen, von Auflösungen oder Grenzen von zum Beispiel einem Analog-Digital-Wandler sowie von Ungenauigkeiten von Referenzen.

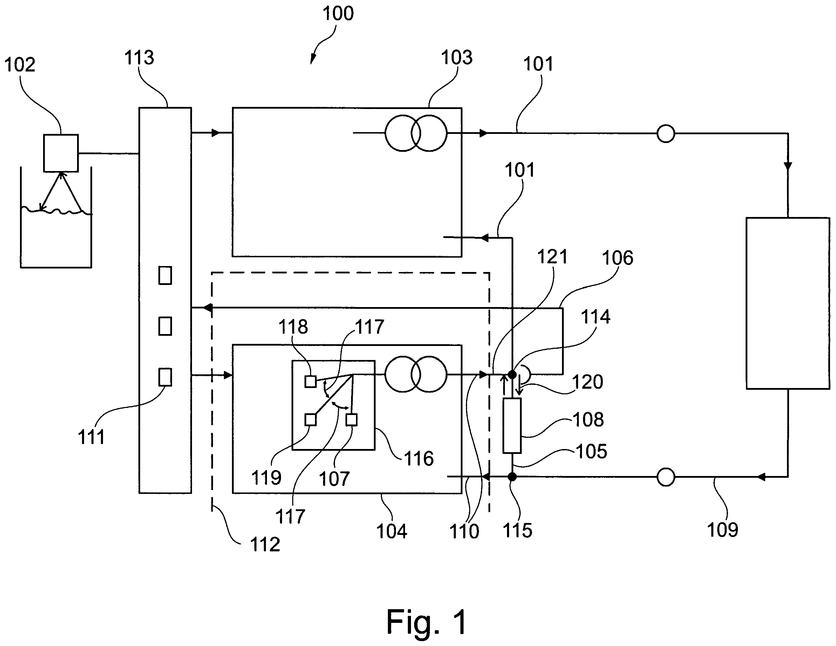

Wenn sowohl der Sollwert I_{Soll} als auch der Prüfstrom I_{Prüf} über dasselbe elektronische Netzwerk (z.B. in der folgenden Figur 1 der Widerstand 108) geführt wird, so können sich Abweichungen bezüglich dessen physikalischen Eigenschaften aufheben, da auch hier das Kompensationsprinzip greift. Als Beispiele könne Nichtlinearitäten des Bauelementes oder Netzwerkes und Wertänderungen durch Temperaturschwankungen im Betrieb angegeben werden.

Gemäß diesem Ausführungsbeispiel ist es somit nicht mehr erforderlich, den Messstrom in einem speziellen Netzwerk vollständig oder teilweise abzubilden und/oder in einem zusätzlichen Überwachungskreis zum Vergleich mit eventuellen Sollwerten zu übermitteln.

Gemäß einem weiteren Ausführungsbeispiel der Erfindung weist die Stromerzeugungseinrichtung eine Stromfühlwiderstandseinheit auf, wobei der Kompensationsstrom durch die Stromfühlwiderstandseinheit durchfließt.

Mit Hilfe einer Spannungsmessung an der Stromfühlwiderstandseinheit kann somit der Betrag der Abweichung des Messstroms von dem Sollwert detektiert werden. Mit anderen Worten kann die Stromerzeugungseinrichtung derart ausgeführt sein, dass der Kompensationsstrom bzw. die Kompensationsspannung proportional zur Abweichung des Messstroms von einem Sollwert ist. Ein mögliches Ausführungsbeispiel dieser Art ist in der folgenden Figur 1 gezeigt.

Gemäß einem weiteren Ausführungsbeispiel der Erfindung ist eine Stromerzeugungseinrichtung angegeben, wobei die erste Stromquelle einen ersten Stromkreis versorgt und wobei die zweite Stromquelle einen Prüfstrom in den ersten Stromkreis einspeist. Weiterhin ist die Stromerzeugungseinrichtung derart ausgeführt, dass das Einspeisen des Prüfstroms den Kompensationsstrom erzeugt.

Dieses Ausführungsbeispiel ist unter anderem in der folgenden Fig. 1 beschrieben. Mit anderen Worten wird in einem zum Messstrom erzeugenden Netzwerk unabhängigen Schaltkreis kontinuierlich oder in gewünschten bestimmten Zeitabständen ein dem Messstrom gleicher oder ungleicher, jedoch invertierter Strom, erzeugt und an einer Vergleichsstelle in den ersten Stromkreis eingespeist und addiert. Der Summenstrom an dieser Vergleichsstelle wird zum Zeitpunkt der Einspeisung überwacht also gemessen und muss bei intakter Funktion einen Erwartungswert aufweisen. Dies entspricht einer Messung und ggf. einer Detektion einer Abweichung auf Basis des Kompensationsprinzips.

Mit anderen Worten wird der Kompensationsstrom im ersten Stromkreis erzeugt, in welchem auch der Messstrom fließt. Dieser erste Stromkreis ist zur Übertragung des Messwertes mittels des elektrischen Messstroms an eine Anzeige oder Bedieneinheit ausgeführt.

Gemäß einem weiteren Ausführungsbeispiel der Erfindung ist die Stromerzeugungseinrichtung derart ausgeführt, dass, falls der Prüfstrom dem Sollwert entspricht, nur dann ein von Null verschiedener Kompensationsstrom erzeugt wird, wenn der Messstrom vom Sollwert abweicht.

Mit anderen Worten, für den Fall, dass der Messstrom fehlerfrei erzeugt und übertragen wurde und somit dem Sollwert entspricht, fällt keine Kompensationsspannung beispielsweise an einer Stromfühlwiderstandseinheit in dem ersten Stromkreis ab. Für diesen Fall würde der Erwartungswert für die Kompensationsspannung 0 V betragen. Weiterhin kann dieser Erwartungswert beispielsweise in einem Mikrocontroller gespeichert sein, dem das Signal der Messung der Kompensationsspannung zugeführt werden kann.

Gemäß einem weiteren Ausführungsbeispiel der Erfindung ist die Stromerzeugungseinrichtung weiterhin derart ausgeführt, dass, falls der Prüfstrom einem Vielfachen des Sollwertes entspricht, die Detektion der Abweichung auf Basis eines von Null verschiedenen Erwartungswertes einer Spannung an der Stromfühlwiderstandseinheit erfolgt.

Dabei kann die Spannung beispielsweise zwischen einer Vergleichsstelle und einem Mikrocontroller gemessen werden. Mit anderen Worten ist in diesem Falle, bei dem der Prüfstrom einem Vielfachen des Sollwertes entsprechen soll, auch bei fehlerfreier Funktion ein Kompensationsstrom zu erwarten, der ungleich Null ist. Somit ist der Erwartungswert der Kompensationsspannung, der beispielsweise in einem Mikrocontroller gespeichert sein kann, ungleich Null.

Gemäß einem weiteren Ausführungsbeispiel der Erfindung ist zumindest der Messstrom oder der Kompensationsstrom ein eingeprägter Strom.

Aufgrund dieser Eigenschaft dieses Ausführungsbeispiels der Erfindung kann man beispielsweise für die Fig. 1 die dort beschriebenen Gleichungen entsprechend der Knotenregel für die ein- und ausfließenden Ströme an den beiden Knotenpunkten 1 und 2 angeben. Somit ist gewährleistet, dass mit großer Genauigkeit eine zu messende Kompensationsspannung einem Betrag des Messstroms zugeordnet werden kann.

Gemäß einem weiteren Ausführungsbeispiel der Erfindung ist die Stromquelle in einem ersten Bereich angeordnet, der eine erhöhte Sicherheitsanforderung erfüllt.

Beispielsweise kann diese Sicherheitsanforderung durch das Safety Integrity Level 3 oder 4 (SIL3 oder 4) realisiert sein. Dabei kann beispielsweise eine galvanische Trennung auf einer Platine zwischen einem ersten und einem zweiten Bereich vorhanden sein, wobei der zweite Bereich die sogenannte EX Norm erfüllt. Damit kann sichergestellt werden, dass die zweite Stromquelle, welche das Kompensationsprinzip zur Überwachung des Messstroms ermöglicht, sicher vor beispielsweise Explosionen, Hitze oder elektrischem Überschlag aus anderen Bereichen der Stromerzeugungseinrichtung geschützt ist. Weiterhin ist es möglich, dass zur Überbrückung einer solchen galvanischen Trennung verschiedene Koppler, wie beispielsweise Optokoppler, eingesetzt werden. Zur Erhöhung der Sicherheit können beispielsweise unidirektionale Koppler verwendet werden.

Gemäß einem weiteren Ausführungsbeispiel der Erfindung weist die Stromerzeugungseinrichtung einen Mikrocontroller auf, wobei beide Stromquellen mit dem Mikrocontroller verbunden sind und wobei dem Mikrocontroller ein Detektionssignal zur Verfügung gestellt wird.

Dabei kann das Detektionssignal die Kompensationsspannung an einem elektrischen Widerstand sein. Aber diese Spannung kann auch zwischen einer Vergleichsstelle, an der der Prüfstrom in den ersten Stromkreis eingespeist wird, und einem weiteren Ort z.B. einem Mikrocontroller gemessen werden.

Somit ist es möglich, dass ein Mikrocontroller zumindest eine der beiden Stromquellen steuert und regelt. Auch kann mittels des Mikrocontrollers ein Abtastprotokoll vorgegeben werden, das die zweite Stromquelle anleitet, zur gewünschten diskreten Abtastseite den beschriebenen Prüfstrom in den zweiten Stromkreis an einer Vergleichsstelle einzuspeisen und somit eine Detektion einer Abweichung des Messstroms vom Sollwert zu ermöglichen. Dies kann eine Reduzierung des Energieverbrauchs bedeuten. Aber auch eine kontinuierliche Abtastung ist möglich.

Gemäß einem weiteren Ausführungsbeispiel der Erfindung ist eine Stromerzeugungseinrichtung angegeben, wobei der Mikrocontroller zum Regeln und Steuern von zumindest einer der beiden Stromquellen ausgeführt ist.

Gemäß einem weiteren Ausführungsbeispiel der Erfindung ist die Stromerzeugungseinrichtung für eine 4- bis 20 mA Zweileiterschleife ausgeführt.

Es kann sich innerhalb des ersten Stromkreises eine Bürde befinden z.B. in Form eines Auswertegerätes.

Gemäß einem weiteren Ausführungsbeispiel der Erfindung ist ein Füllstandsmessgerät mit einer Stromerzeugungseinrichtung angegeben.

Gemäß einem weiteren Ausführungsbeispiel der Erfindung ist ein Druckmessgerät mit einer Stromerzeugungseinrichtung angegeben.

Gemäß einem weiteren Ausführungsbeispiel der Erfindung ist ein Durchflussmessgerät mit einer Stromerzeugungseinrichtung angegeben.

Gemäß einem weiteren Ausführungsbeispiel der Erfindung ist ein Verfahren zur Erzeugung und gleichzeitigen Überwachung eines Messstroms für ein Füllstands-, Druck- oder Durchflussmessgerät angegeben, wobei das Verfahren die folgenden Schritte aufweist: Bereitstellen einer ersten Stromquelle, Bereitstellen einer zweiten Stromquelle, Bereitstellen einer Detektionsschaltung zur Detektion einer Abweichung des Messstroms, Erzeugen eines Messstroms mittels der ersten Stromquelle, Erzeugen eines Kompensationsstroms mittels der zweiten Stromquelle, Kompensieren zumindest eines Teils des Messstroms durch den Kompensationsstrom und Detektieren einer Abweichung des Messstroms von einem Sollwert auf Basis des Kompensationsstromes.

Mit anderen Worten wird aufgrund des Prüfstroms in den ersten Stromkreis elektrische Energie eingespeist, die zur Ausbildung einer Kompensationsspannung an einer Stromfühlwiderstandseinheit oder zwischen einer Vergleichsstelle und einem weiteren Ort führen kann, wenn es zuvor zu einer Abweichung des Messstroms von einem Sollwert gekommen ist. Dabei kann der Prüfstrom gleich dem Sollwert eingestellt werden oder auch ungleich dem Sollwert. Im ersten Fall ist eine Detektion einer Abweichung dann gegeben, wenn eine Spannung an beschriebener Stelle abgegriffen werden kann, die ungleich Null ist. Im zweiten Fall wird eine Detektion beispielsweise als akustisches, optisches oder elektrisches Signal an eine Detektionsstelle weitergeleitet, falls der abgegriffene Wert der Kompensationsspannung nicht einem zuvor berechneten und /oder gespeicherten Erwartungswert entspricht.

Gemäß einem weiteren Ausführungsbeispiel der Erfindung ist ein computerlesbares Medium angegeben, auf dem ein Computerprogrammelement gespeichert ist, das, wenn es auf einem Prozessor ausgeführt, den Prozessor anleitet, die vorangegangenen Schritte durchzuführen.

Gemäß einem weiteren Ausführungsbeispiel der Erfindung ist ein Computerprogrammelement angegeben, das, wenn es auf einem Prozessor ausgeführt wird, den Prozessor anleitet, die vorangegangenen Schritte zu veranlassen.

Dabei kann das Computerprogrammelement zum Beispiel Teil einer Software sein, die auf einem Prozessor eines Sensors gespeichert ist. Ebenso kann das Computerprogrammelement in einer Steuereinheit oder einer Computereinheit verwendet werden, welche in Kombination mit einer Stromerzeugungseinrichtung den Sensor steuert und regelt. Weiterhin umfasst dieses Ausführungsbeispiel der Erfindung ein Computerprogrammelement, welches schon von Anfang an die Erfindung verwendet, sowie auch ein Programmelement, welches durch ein Update ein bestehendes Programm zur Verwendung der Erfindung veranlasst.

Gemäß einem weiteren Ausführungsbeispiel der Erfindung ist ein auswertgerät mit einer Stromerzeugungseinrichtung gemäß einem der vorherigen Ausführungsbeispiel angegeben.

Ergänzend sei darauf hingewiesen, dass "umfassend" und "aufweisend" keine anderen Elemente oder Schritte ausschließen und "eine" oder "ein" keine Vielzahl ausschließen. Ferner sei daraufhingewiesen, dass Merkmale oder Schritte, die mit dem Verweis auf eines der obigen Ausführungsbeispiele beschrieben worden sind, auch in Kombination mit anderen Merkmalen oder Schritten anderer oben beschriebener Ausführungsbeispiele der Erfindung verwendet werden können. Bezugszeichen in den Ansprüchen sind explizit nicht als Einschränkung anzusehen. Im Folgenden werden mit Verweis auf die Figuren bevorzugte Ausführungsbeispiele der Erfindung beschrieben.

### KURZE BESCHREIBUNG DER FIGUREN:

Fig. 1 zeigt eine schematische, zweidimensionale Darstellung einer Stromerzeugungseinrichtung zur Erzeugung und gleichzeitigen Überwachung eines Messstroms für ein Füllstands-, Druck- oder Durchflussmessgerät gemäß einem Ausführungsbeispiel der Erfindung.
Fig. 2 zeigt ein Flussdiagramm eines Verfahrens gemäß einem Ausführungsbeispiel der Erfindung.

Die Darstellungen in den Figuren sind schematisch und nicht maßstäblich.

In der folgenden Figurenbeschreibung werden für die gleichen oder ähnlichen Elemente die gleichen Bezugsziffern verwendet.

### DETAILLIERTE BESCHREIBUNG VON AUSFÜHRUNGSBEISPIELEN:

Fig. 1 zeigt eine Stromerzeugungseinrichtung 100 zur Erzeugung und gleichzeitigen Überwachung eines Messstroms 101, der mit einem Messwert eines Sensors 102 korrespondiert. Es ist eine erste Stromquelle 103 zu sehen, die den Messstrom 101 erzeugt. Dabei handelt es sich um einen eingeprägten Ausgangsstrom der Stromquelle 103. Weiterhin ist eine zweite Stromquelle 104 gezeigt, die den Prüfstrom 110 in den ersten Stromkreis 109 einspeist. Auf Grund dieser Einspeisung wird der Kompensationsstrom 105 erzeugt. Mit anderen Worten erzeugt die zweite Stromquelle 104 ebenso den Kompensationsstrom 105. Dabei kompensiert der erzeugte Kompensationsstrom 105 zumindest einen Teil des Messstroms 101.

Es ist weiterhin die Detektionsschaltung 106 gezeigt, die in diesem Falle als Spannungsmessung an dem ersten Knotenpunkt 114 durch den Mikrocontroller 113 ausgeführt ist. Dabei ist mittels des Kompensationsprinzips die Detektionsschaltung 106 zur Detektion einer Abweichung des Betrags des Messstroms von einem Sollwert 107 auf Basis des Kompensationsstroms ausgeführt. Dabei ist der Sollwert, den der Messstrom in fehlerfreiem Zustand aufweist, symbolisch als Quadrat in einem Speicherelement 116 gezeigt, das sich innerhalb der zweiten Spannungsquelle befindet. Dabei symbolisiert das Quadrat den gespeicherten Sollwert.

Wie mittels der Pfeile 117 gezeigt ist, kann zwischen verschiedenen Werten durch einen Benutzer ausgesucht werden, die dann als Prüfstrom 110 in den ersten Stromkreis 109 eingespeist werden. Dabei symbolisieren die Quadrate 118 und 119 Werte für den Prüfstrom, die einem Vielfachen beispielsweise einem 0,5-fachen oder einem 1,2-fachen des Sollwertes entsprechen. Als Betrag des Prüfstroms wird der Sollwert, wie bereits beschrieben, durch die zweite Stromquelle 104 bereitgestellt, falls das Quadrat 107 ausgewählt wird. Mit anderen Worten symbolisieren die Quadrate 107, 118 und 119 die Wahl einer Vorgabe des Prüfstroms durch einen Benutzer.

Weiterhin ist eine Stromfühlwiderstandseinheit 108 gezeigt, die als elektrischer Widerstand beispielsweise als Ohmscher Widerstand, ausgeführt sein kann. Dabei ist deutlich zu sehen, dass zwischen dem ersten Knotenpunkt 114 und dem zweiten Knotenpunkt 115 der Kompensationsstrom 105 fließt bzw. die Kompensationsspannung abfällt. Da der Prüfstrom an dem Knotenpunkt 114 eingespeist wird, erfolgt hier physikalisch die Addierung aller Ströme. Auch kann an dieser Vergleichsstelle, wie gezeigt, eine Spannung abgegriffen werden. In Fig.1 wird diese Spannung an dem Knotenpunkt 114 durch einen Mikrocontroller 113 abgegriffen. Diese kann je nachdem, auf welchem Potential der Mikrocontroller liegt, auch der Kompensationsspannung entsprechen.

Fig. 1 zeigt deutlich, dass die zweite Stromquelle 104 den Prüfstrom 110 in den ersten Stromkreis an dem ersten Knotenpunkt 114, der als Vergleichsstelle dient, einspeist. Das Einspeisen des Prüfstroms wiederum verursacht den Kompensationsstrom 105 je nach Verhältnis zwischen dem vorliegenden Messstrom 101 und dem ausgewählten Betrag des Prüfstroms 110. Die Tatsache, dass sowohl der Messstrom als auch der Prüfstrom eingeprägte Ausgangsströme sind, führt dazu dass sowohl an dem Eingang und dem Ausgang der ersten Stromquelle der gleiche Strom fließt, als auch an dem Eingang und dem Ausgang der zweiten Stromquelle der gleiche elektrischen Strom fließt.

In diesem Ausführungsbeispiel der Erfindung erfolgt die Detektion einer Abweichung mittels der Übertragung der Spannung, die an dem Knotenpunkt 114 anliegt, an den Mikrocontroller 113. Dort können mehrere Erwartungswerte 111 gespeichert sein. Diese Erwartungswerte hängen von den zuvor beschriebenen möglichen Werten des Prüfstroms ab, die durch die Quadrate 107, 118 und 119 in der ersten Stromquelle dargestellt sind. Sowohl für den ersten Knotenpunkt 114 als auch den zweiten Knotenpunkt 115, gilt gemäß dem ersten Kirchhoffschen Gesetz, dass in einem elektrischen Knotenpunkt die Summe der zufließenden Ströme gleich der Summe der abfließenden Ströme sein muss Somit gelten folgende Verhältnismäßigkeiten für den Prüfstrom I_{Prüf} und den Messstrom I_{Messstrom}:
Für den ersten Knotenpunkt 114 gilt I_{Prüf} = I₁ + I_{Messstrom} und für den zweiten Knotenpunkt 115 gilt I_{Messstrom} = I₂ + I_{Prüf}. Sind die beiden Ströme I_{Messstrom} und I_{Prüf} ungleich, so fließt ein Strom I₁ = -I₂. Dabei ist I₁ in Fig. 1 mit 120 gezeigt und I₂ ist in Fig. 1 mit dem Pfeil 121 symbolisiert. An der Stromfühlwiderstandseinheit 108 entsteht eine Kompensationsspannung U_{Kompensation} = I₁ x R_{Stromfühlwiderstand}. Sind die beiden Ströme I_{Messstrom} und I_{Prüf} gleich groß, so ist I₁ und I₂ gleich Null. An 108 entsteht keine Spannung. Dieses Beispiel beschreibt den Fall, in dem die zweite Stromquelle einen Prüfstrom ausgibt, der gleich dem Sollwert des Messstroms ist, in dem also das Quadrat 107 von einem Benutzer ausgewählt wird.

Weiterhin ist zu sehen, dass die Stromerzeugungseinrichtung einen ersten Bereich 102 aufweist, der erhöhte Sicherheitsanforderungen erfüllen kann. Dies können beispielsweise Anforderungen der Norm SIL3 oder SIL4 sein. Ebenso ist durch die Pfeile, die von dem Mikrocontroller 113 auf die Stromquellen gezeigt sind, angedeutet, dass der Mikrocontroller die beiden Stromquellen regelt und steuert.

Nach einer Messung der Kompensationsspannung wird diese mit dem Erwartungswert, der mit dem Betrag des eingespeisten Prüfstroms korrespondiert verglichen, und gegebenenfalls eine Abweichung detektiert und als Signal an den Benutzer ausgegeben.

Mit anderen Worten kann mit der in Fig. 1 gezeigten Stromerzeugungseinrichtung der Messstrom 101 auf seinen Betrag hin derart überwacht werden, dass Nichtlinearitäten, Einflüsse von Temperaturschwankungen, Auflösungen von beispielsweise Analog-Digital-Konvertern oder Ungenauigkeiten von Referenzen alle in externen Überwachungskreisen zur Überwachung eines Messstroms benutzt werden, vermieden werden können. Mit anderen Worten ist es als ein Vorteil der Stromerzeugungseinrichtung anzusehen, dass kein externer Überwachungskreis benötigt wird, in dem die vorgenannten Nachteile auftreten können.

Bei dem Sensor 102 handelt es sich um einen Füllstandssensor oder Drucksensor für einen Behälter oder um einen Durchflusssensor. Die Stromerzeugungseinrichtung 100 kann auch in den Sensor oder in ein Auswertgerät integriert sein.

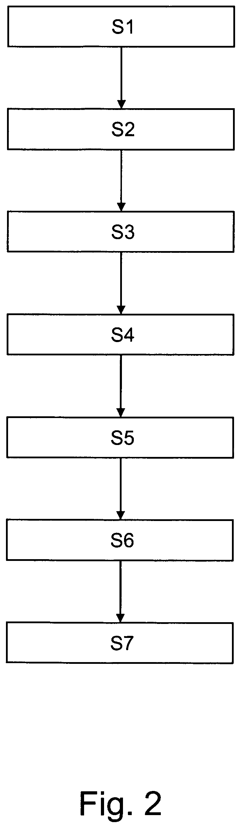

Fig. 2 zeigt ein Verfahren zur Erzeugung und gleichzeitigen Überwachung eines Messstroms für einen Sensor. In Schritt S1 erfolgt ein Bereitstellen einer ersten Stromquelle und in Schritt S2 ein Bereitstellen einer zweiten Stromquelle. Weiterhin erfolgt ein Bereitstellen einer Detektionsschaltung zur Detektion einer Abweichung des Messstroms in Schritt S3.

Mittels der ersten Stromquelle wird ein Messstrom in Schritt S4 erzeugt, wobei das Erzeugen eines Kompensationsstromes mittels der zweiten Stromquelle erfolgt (Schritt S5). Zumindest ein Teil des Messstroms wird durch den Kompensationsstrom kompensiert (Schritt S6), woraufhin ein Detektieren einer Abweichung des Messstroms von einem Sollwert auf Basis des Kompensationsstroms erfolgt (Schritt S7).

Dabei kann beispielsweise eine elektrische Schaltung verwendet werden, indem das Kompensationsprinzip angewendet wird, um den Messstrom zu überwachen. Fällt zwischen zwei vorgegebenen Punkten beispielsweise zwischen einer Vergleichsstelle und einem Mikrocontroller eine Spannung ab, die nicht einem dem Prüfstrom korrespondierenden Erwartungswert dieser Spannung überein, so kann ein Detektionsereignis an einen Benutzer weitergegeben werden.

## Patentansprüche

1. Stromerzeugungseinrichtung (100) zur Erzeugung und gleichzeitigen Überwachung eines Messstroms (101), der mit einem von einem Füllstands-, Druck- oder Durchflussmessgerät (102) ermittelten Messwert korrespondiert, die Stromerzeugungseinrichtung aufweisend:
eine erste Stromquelle (103) zum Erzeugen eines Messstroms;
eine zweite Stromquelle (104) zum Erzeugen eines Kompensationsstromes (105) zum Kompensieren zumindest eines Teils des Messstroms;
eine Detektionsschaltung (106) zur Detektion einer Abweichung des Messstroms von einem Sollwert (107) auf Basis des Kompensationsstromes; und
eine Stromfühlwiderstandseinheit (108) zum Messen des Kompensationsstromes;
wobei der Kompensationsstrom und der Messstrom durch die Strohmfühlwiderstandseinheit durchfließen;
wobei die erste Stromquelle einen ersten Stromkreis (109) versorgt;
wobei die zweite Stromquelle einen Prüfstrom (110) in den ersten Stromkreis einspeist; und
wobei die Stromerzeugungseinrichtung derart ausgeführt ist, dass das Einspeisen des Prüfstroms den Kompensationsstrom erzeugt;
wobei der Sollwert als Betrag des Prüfstroms bereitgestellt wird.

2. Stromerzeugungseinrichtung gemäß Anspruch 1,
wobei die Stromerzeugungseinrichtung derart ausgeführt ist, dass falls der Prüfstrom dem Sollwert entspricht, nur dann ein von null verschiedener Kompensationsstrom erzeugt wird, wenn der Messstrom vom Sollwert abweicht.

3. Stromerzeugungseinrichtung gemäß Anspruch 1 bis 2,
wobei die Stromerzeugungseinrichtung derart ausgeführt ist, dass falls der Prüfstrom einem Vielfachen des Sollwertes entspricht, die Detektion der Abweichung auf Basis eines von Null verschiedenen Erwartungswertes (111) einer Spannung an der Stromfühlwiderstandseinheit erfolgt.

4. Stromerzeugungseinrichtung gemäß einem der vorherigen Ansprüche,
wobei zumindest der Messstrom oder der Prüfstrom ein eingeprägter Strom ist.

5. Stromerzeugungseinrichtung gemäß einem der vorherigen Ansprüche, wobei die Detektion der Abweichung mittels einer Spannungsmessung erfolgt.

6. Stromerzeugungseinrichtung gemäß einem der vorherigen Ansprüche,
wobei die zweite Stromquelle in einem ersten Bereich (112) angeordnet ist; und
wobei der erste Bereich erhöhte Sicherheitsanforderungen erfüllt.

7. Stromerzeugungseinrichtung gemäß einem der vorherigen Ansprüche,
wobei die Stromerzeugungseinrichtung für eine 4-20mA Zweileiterschleife ausgeführt ist.

8. Füllstandsmessgerät mit einer Stromerzeugungseinrichtung gemäß einem der Ansprüche 1-7.

9. Druckmessgerät mit einer Stromerzeugungseinrichtung gemäß einem der Ansprüche 1-7.

10. Durchflussmessgerät mit einer Stromerzeugungseinrichtung gemäß einem der Ansprüche 1-7.

11. Verfahren zum Erzeugen und gleichzeitigen Überwachen eines Messstroms, der mit einem von einem Füllstands-, Druck- oder Durchflussmessgerät (102) ermittelten Messwert korrespondiert,, das Verfahren aufweisend die Schritte:
Bereitstellen einer ersten Stromquelle (S1);
Bereitstellen einer zweiten Stromquelle (S2);
Bereitstellen einer Detektionsschaltung zur Detektion einer Abweichung des Messstroms (S3);
Erzeugen eines Messstroms mittels der ersten Stromquelle (S4);
Erzeugen eines Kompensationsstromes mittels der zweiten Stromquelle (S5);
Kompensieren zumindest eines Teils des Messstroms durch den Kompensationsstrom (S6), wobei der Kompensationsstrom und der Messstrom durch die Stromfühlwiderstandseinheit durchfließt; und
Detektieren einer Abweichung des Messstroms von einem Sollwert auf Basis des Kompensationsstromes (S7), wobei der Sollwert als Betrag des Prüfstroms bereitgestellt wird.

12. Programmelement, das, wenn es auf einem Prozessor ausgeführt wird, den Prozessor anleitet, die folgenden Schritte durchzuführen:
Bereitstellen einer ersten Stromquelle (S1);
Bereitstellen einer zweiten Stromquelle (S2);
Bereitstellen einer Detektionsschaltung zur Detektion einer Abweichung des Messstroms (S3);
Erzeugen eines Messstroms, der mit einem von einem Füllstands-, Druck- oder Durchflussmessgerät (102) ermittelten Messwert korrespondiert, mittels der ersten Stromquelle (S4);
Erzeugen eines Kompensationsstromes mittels der zweiten Stromquelle (S5);
Kompensieren zumindest eines Teils des Messstroms durch den Kompensationsstrom (S6), wobei der Kompensationsstrom und der Messstrom durch die Stromfühlwiderstandseinheit durchfließt; und
Detektieren einer Abweichung des Messstroms von einem Sollwert auf Basis des Kompensationsstromes (S7), wobei der Sollwert als Betrag des Prüfstroms bereitgestellt wird.

13. Computerlesbares Medium, auf dem ein Programmelement gespeichert ist, das, wenn es auf einem Prozessor ausgeführt wird, den Prozessor anleitet, die folgenden Schritte durchzuführen:
Bereitstellen einer ersten Stromquelle (S1);
Bereitstellen einer zweiten Stromquelle (S2);
Bereitstellen einer Detektionsschaltung zur Detektion einer Abweichung des Messstroms (S3);
Erzeugen eines Messstroms, der mit einem von einem Füllstands-, Druck- oder Durchflussmessgerät (102) ermittelten Messwert korrespondiert, mittels der ersten Stromquelle (S4);
Erzeugen eines Kompensationsstromes mittels der zweiten Stromquelle (S5);
Kompensieren zumindest eines Teils des Messstroms durch den Kompensationsstrom (S6), wobei der Kompensationsstrom und der Messstrom durch die Stromfühlwiderstandseinheit durchfließt; und
Detektieren einer Abweichung des Messstroms von einem Sollwert auf Basis des Kompensationsstromes (S7) wobei der Sollwert als Betrag des Prüfstroms bereitgestellt wird.

## Claims

1. A current generating device (100) for the generation and simultaneous monitoring of a measuring current (101) for a level meter, pressure gauge or flowmeter (102), wherein the current generating device features:
a first current source (103) for generating a measuring current;
a second current source (104) for generating a compensating current (105) in order to compensate at least part of the measuring current; and
a detection circuit (106) for detecting a deviation of the measuring current from a set point value (107) on the basis of the compensating current;
a current sensing resistor unit (108) for measuring the compensation current;
wherein the compensation current and the measuring current flow through the current sensing resistor unit (108);
wherein the first current source supplies a first circuit (109);
wherein the second current source feeds a test current (110) into the first circuit; and
wherein the current generating device is configured such that feeding the test current generates the compensation current;
wherein the set point value is provided as the amount of test current.

2. The current generating device of claim 1,
wherein the current generating device is realized in such a way that, if the testing current corresponds to the set point value, a compensating current other than zero is only generated if the measuring current deviates from the set point value.

3. The current generating device of claims 1 to 2,
wherein the current generating device is realized in such a way that, if the testing current corresponds to a multiple of the set point value, the deviation is detected on the basis of an expectancy value (111) other than zero for a voltage at the current-sensing resistor unit.

4. The current generating device of one of the preceding claims,
wherein at least the measuring current or the testing current is a load-independent current.

5. The current generating device of one of the preceding claims, wherein the detection of the deviation is realized by means of a voltage measurement.

6. The current generating device of one of the preceding claims,
wherein the second current source is arranged in a first region (112); and
wherein the first region fulfills enhanced safety requirements.

7. The current generating device of one of the preceding claims,
wherein the current generating device is designed for a 4 mA - 20 mA two-wire loop.

8. A level meter with a current generating device of one of claims 1-7.

9. A pressure gauge with a current generating device of one of claims 1-7.

10. A flowmeter with a current generating device of one of claims 1-7.

11. A method for the generation and simultaneous monitoring of a measuring current for a level meter, pressure gauge or flowmeter, wherein the method comprises the following steps:
providing a first current source (S1);
providing a second current source (S2);
providing a detection circuit for detecting a deviation of the measuring current (S3);
generating a measuring current by means of the first current source (S4);
generating a compensating current by means of the second current source (S5);
compensating at least part of the measuring current with the compensating current (S6), wherein the compensating current and the measuring current flow through a current sensing resistor unit; and
detecting a deviation of the measuring current from a set point value on the basis of the compensating current (S7), wherein the set point value is provided as the amount of test current.

12. A program element that instructs a processor to carry out the following steps when it is executed on the processor:
providing a first current source (S1);
providing a second current source (S2);
providing a detection circuit for detecting a deviation of the measuring current (S3);
generating a measuring current by means of the first current source (S4);
generating a compensating current by means of the second current source (S5);
compensating at least part of the measuring current with the compensating current (S6) wherein the compensating current and the measuring current flow through a current sensing resistor unit; and
detecting a deviation of the measuring current from a set point value on the basis of the compensating current (S7), wherein the set point value is provided as the amount of test current.

13. A computer-readable medium, on which a program element is stored that instructs a processor to carry out the following steps when it is executed on the processor:
providing a first current source (S1);
providing a second current source (S2);
providing a detection circuit for detecting a deviation of the measuring current (S3);
generating a measuring current by means of the first current source (S4);
generating a compensating current by means of the second current source (S5);
compensating at least part of the measuring current with the compensating current (S6) wherein the compensating current and the measuring current flow through a current sensing resistor unit; and
detecting a deviation of the measuring current from a set point value on the basis of the compensating current (S7) wherein the set point value is provided as the amount of test current.

## Revendications

1. Dispositif de génération de courant (100) destiné à générer et à surveiller simultanément un courant de mesure (101) qui correspond à une valeur de mesure déterminée d'un appareil de mesure de niveau de remplissage, de pression ou de débit (102), le dispositif de génération de courant comportant :
une première source de courant (103) destinée à générer un courant de mesure,
une seconde source de courant (104) destinée à générer un courant de compensation (105) pour compenser au moins une partie du courant de mesure,
un circuit de détection (106) destiné à détecter un écart du courant de mesure par rapport à une valeur de consigne (107) sur la base du courant de compensation, et
une unité de résistance sensible au courant (108) destinée à mesurer le courant de compensation,
dans lequel le courant de compensation et le courant de mesure circulent à travers l'unité de résistance sensible au courant,
dans lequel la première source de courant alimente un premier circuit électrique (109),
dans lequel la seconde source de courant fournit un courant d'essai (110) dans le premier circuit électrique, et
dans lequel le dispositif de génération de courant est configuré de sorte que la fourniture du courant d'essai génère le courant de compensation,
dans lequel la valeur de consigne est fournie sous la forme d'une quantité du courant d'essai.

2. Dispositif de génération de courant selon la revendication 1,
dans lequel le dispositif de génération de courant est configuré de sorte que si le courant d'essai correspond à la valeur de consigne, alors un courant de compensation différent de zéro est généré uniquement lorsque le courant de mesure s'écarte de la valeur de consigne.

3. Dispositif de génération de courant selon les revendications 1 à 2,
dans lequel le dispositif de génération de courant est configuré de sorte que si le courant d'essai correspond à un multiple de la valeur de consigne, la détection de l'écart s'effectue sur la base d'une valeur attendue (111) d'une tension différente de zéro sur l'unité de résistance sensible au courant.

4. Dispositif de génération de courant selon l'une des revendications précédentes,
dans lequel au moins le courant de mesure ou le courant d'essai est un courant contraint.

5. Dispositif de génération de courant selon l'une des revendications précédentes,
dans lequel la détection de l'écart s'effectue au moyen d'une mesure de tension.

6. Dispositif de génération de courant selon l'une des revendications précédentes,
dans lequel la seconde source de courant est agencée dans une première zone (112), et
dans lequel la première zone satisfait à des exigences de sécurité étendues.

7. Dispositif de génération de courant selon l'une des revendications précédentes,
dans lequel le dispositif de génération de courant est configuré pour une boucle à deux conducteurs de 4 à 20 mA.

8. Appareil de mesure de niveau de remplissage ayant un dispositif de génération de courant selon l'une des revendications 1 à 7.

9. Appareil de mesure de pression ayant un dispositif de génération de courant selon l'une des revendications 1 à 7.

10. Appareil de mesure de débit ayant un dispositif de génération de courant selon l'une des revendications 1 à 7.

11. Procédé pour générer et surveiller simultanément un courant de mesure qui correspond à une valeur de mesure déterminée par un appareil de mesure de niveau de remplissage, de pression ou de débit (102), le procédé comportant les étapes consistant à :
fournir une première source de courant (S1),
fournir une seconde source de courant (S2),
fournir un circuit de détection pour détecter un écart du courant de mesure (S3),
générer un courant de mesure au moyen de la première source de courant (S4),
générer un courant de compensation au moyen de la seconde source de courant (S5),
compenser au moins une partie du courant de mesure avec le courant de compensation (S6), le courant de compensation et le courant de mesure circulant à travers l'unité de résistance sensible au courant, et
détecter un écart du courant de mesure par rapport à une valeur de consigne sur la base du courant de compensation (S7), la valeur de consigne étant fournie sous la forme d'une quantité du courant d'essai.

12. Elément de programme qui, lorsqu'il est exécuté sur un processeur, amène le processeur à exécuter les étapes suivantes consistant à :
fournir une première source de courant (S1),
fournir une seconde source de courant (S2),
fournir un circuit de détection pour détecter un écart du courant de mesure (S3),
générer un courant de mesure qui correspond à une valeur de mesure déterminée par un appareil de mesure de niveau de remplissage, de pression ou de débit (102), au moyen de la première source de courant (S4),
générer un courant de compensation au moyen de la seconde source de courant (S5),
compenser au moins une partie du courant de mesure avec le courant de compensation (S6), le courant de compensation et le courant de mesure circulant à travers l'unité de résistance sensible au courant, et
détecter un écart du courant de mesure par rapport à une valeur de consigne sur la base du courant de compensation (S7), la valeur de consigne étant fournie sous la forme d'une quantité du courant d'essai.

13. Support lisible par ordinateur sur lequel est mémorisé un élément de programme qui, lorsqu'il est exécuté sur un processeur, amène le processeur à exécuter les étapes suivantes consistant à :
fournir une première source de courant (S1),
fournir une seconde source de courant (S2),
fournir un circuit de détection pour détecter un écart du courant de mesure (S3),
générer un courant de mesure qui correspond à une valeur de mesure déterminée par un appareil de mesure de niveau de remplissage, de pression ou de débit (102), au moyen de la première source de courant (S4),
générer un courant de compensation au moyen de la seconde source de courant (S5),
compenser au moins une partie du courant de mesure avec le courant de compensation (S6), le courant de compensation et le courant de mesure circulant à travers l'unité de résistance sensible au courant, et
détecter un écart du courant de mesure par rapport à une valeur de consigne sur la base du courant de compensation (S7), la valeur de consigne étant fournie sous la forme d'une quantité du courant d'essai.
